# EUROPEAN PATENT APPLICATION

(11) **EP 2 060 886 A1**
(43) Date of publication of application: **20.05.2009**
(21) Application number: 08738653.8
(22) Date of filing: 13.03.2008
(51) Int. Cl.: G01J 1/02, G01J 1/42, B60H 1/00, B60H 1/24, B60Q 1/02, G01J 5/00, G01K 1/14, G01V 8/12

(54) **COMBINED SENSOR**

(30) Priority: 15.03.2007 JP 2007066565
(71) Applicant: Calsonic Kansei Corporation, Kita-ku Saitama-shi Saitama-ken 331-8501 (JP)
(72) Inventor: SUNAGA, Hideki, Saitama-shi Saitama 331-8501 (JP); URAYAMA, Katsuyuki, Saitama-shi Saitama 331-8501 (JP); NAKAMURA, Yutaka, Saitama-shi Saitama 331-8501 (JP); INOUE, Hirokazu, Saitama-shi Saitama 331-8501 (JP); HOJO, Shuji, Saitama-shi Saitama 331-8501 (JP)
(74) Representative: Köhler, Walter
(86) International application number: PCT/JP2008/054582
(87) International publication number: WO 2008/114675

(57) **Abstract**

A compound sensor which can improve the space for installing sensors and an operation for installing sensors by organizing various types of sensors, are provided. A compound sensor according to the present invention includes a light-shielding plate (3A) having one face onto which sunlight is irradiated and the other face located on a side opposite to the one face, which shields the sunlight from the one face side toward the other face side, a solar sensor (8A-8C) provided in the one face of the light-shielding plate (3A), and a temperature sensor provided in the other face side of the light-shielding plate (3A).

## Description

### Technical Field

The present invention relates to a compound sensor, more particularly, to a compound sensor to be installed in an instrument panel or the like of an automobile.

### Related Art Statement

An air-conditioning device is generally provided in an automobile. In order to automatically control the air-conditioning device, various sensors (for example, a temperature sensor, a humidity sensor, and a solar sensor) are installed in a vehicle, signals detected from the various sensors are loaded into a microcomputer to conduct calculation, and a blowing volume and a blowing direction into the vehicle are controlled according to the calculation results.

In a conventional automobile, the above-described various sensors are individually installed in an instrument panel, an inner face of a windscreen and the like (refer to, for example, JP3137525B and JP2605926Y).

### Disclosure of the Invention

However, when the various sensors are individually installed in the instrument panel, the inner face of the windscreen and the like as in the above-described conventional art, an operation which individually installs the various sensors becomes complex, and an operation which wires harnesses connected to the various sensors also becomes complex.

Recently, the types of sensors are increased, but not all of these sensors can be installed in the instrument panel or the like because space is limited.

It is, therefore, an object of the present invention to provide a compound sensor, which can make efficient use of space for installing sensors and an operation for installing sensors by organizing various types of sensors.

A compound sensor includes a light-shielding plate having one face onto which sunlight is irradiated and the other face located on a side opposite to the one face, which shields the sunlight from the one face side toward the other face side, a solar sensor provided in the one face of the light-shielding plate, and a temperature sensor provided in the other face side of the light-shielding plate.

According to the above structure, since the solar sensor is provided in the one face of the light-shielding plate, the entering direction and the amount of solar radiation of the sunlight can be effectively detected. In addition, since the temperature sensor is provided in the other face side of the light-shielding plate, the sunlight can be prevented from directly hitting the temperature sensor, and thus, the air around the temperature sensor can be effectively detected.

Moreover, according to the above structure, by collectively making the solar sensor and the temperature sensor as one compound sensor, the space for installing the sensors can be improved, and also the operation for installing the sensors can be improved.

In one embodiment of the present invention, the solar sensor is disposed in right and left portions and a front portion of the light-shielding plate.

In one embodiment of the present invention, the other face of the light-shielding plate is provided with an attachment plate, which extends in a light-shielding area of the light-shielding plate from the other face of the light-shielding plate, and the temperature sensor is disposed in the attachment plate.

In one embodiment of the present invention, the attachment plate is provided with a humidity sensor and an environment sensor which detects air components, air-polluting substances and air odors, in addition to the temperature sensor.

In one embodiment of the present invention, an air flow is formed around the attachment plate, and the environment sensor is disposed in a downstream side of the temperature and humidity sensors along the air flow.

In one embodiment of the present invention, the one face of the light-shielding plate is provided with an auto-light sensor, which detects visualized light having a predetermined intensity or more, in addition to the solar sensor.

In one embodiment of the present invention, the other face side of the light shielding plate is provided with an infrared sensor, which measures the temperature of a person's face.

In addition, an instrument panel includes the compound sensor according to the present invention.

### Brief Description of Drawings

FIG. 1A is a perspective view illustrating a cap as viewed from the rear and obliquely upward by disassembling a compound sensor according to the present invention.
FIG. 1B is a perspective view illustrating a sensor retainer as viewed from the rear and obliquely upward by disassembling the compound sensor according to the present invention.
FIG. 1C is a perspective view illustrating a housing case as viewed from the rear and obliquely upward by disassembling the compound sensor according to the present invention.
FIG. 2A is a perspective view illustrating the cap as viewed from the rear and obliquely downward by disassembling the compound sensor according to the present invention.
FIG. 2B is a perspective view illustrating the sensor retainer as viewed from the rear and obliquely downward by disassembling the compound sensor according to the present invention.
FIG. 2C is a perspective view illustrating the housing case as viewed from the rear and obliquely downward by disassembling the compound sensor according to the present invention.
FIG. 3A is a perspective view illustrating the cap as viewed from the front and obliquely upward by disassembling the compound sensor according to the present invention.
FIG. 3B is a perspective view illustrating the sensor retainer as viewed from the rear and obliquely downward by disassembling the compound sensor according to the present invention.
FIG. 3C is a perspective view illustrating the bousing case as viewed from the rear and obliquely downward by disassembling the compound sensor according to the present invention.
FIG. 4A is a perspective view illustrating the cap as viewed from the front obliquely and downward by disassembling the compound sensor according to the present invention.
FIG. 4B is a perspective view illustrating the sensor retainer as viewed from the rear and obliquely downward by disassembling the compound sensor according to the present invention.
FIG. 4C is a perspective view illustrating the housing case as viewed from the rear and obliquely downward by disassembling the compound sensor according to the present invention.
FIG. 5 is a perspective view illustrating the compound sensor with the cap removed.
FIG. 6 is a perspective view of the compound sensor according to the present invention viewed from the rear and obliquely upward.
FIG. 7 is a front view illustrating the compound sensor in FIG. 6.
FIG. 8 is a view illustrating the bottom face of the compound sensor in FIG. 6 when slightly shifted from the central line.

### Description of Reference Numbers

- 1: Compound sensor
- 2: Cap
- 3: Sensor retainer
- 3A: Light-shielding plate
- 3B: Attachment plate
- 4: Housing case
- 8A-8C: Solar sensor
- 9: Auto-light sensor
- 11: Infrared sensor
- 12: Sensor housing container (temperature sensor and humidity sensor)
- 13: Environment sensor

### Best Mode for Carrying out the Invention

Hereinafter an embodiment of the present invention will be described with reference to the drawings

### Embodiment

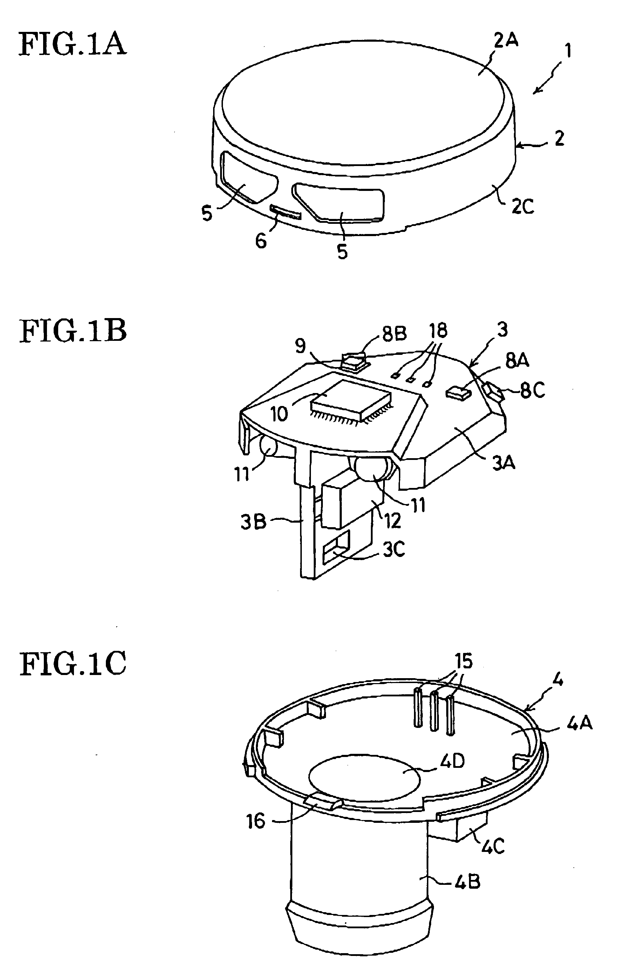

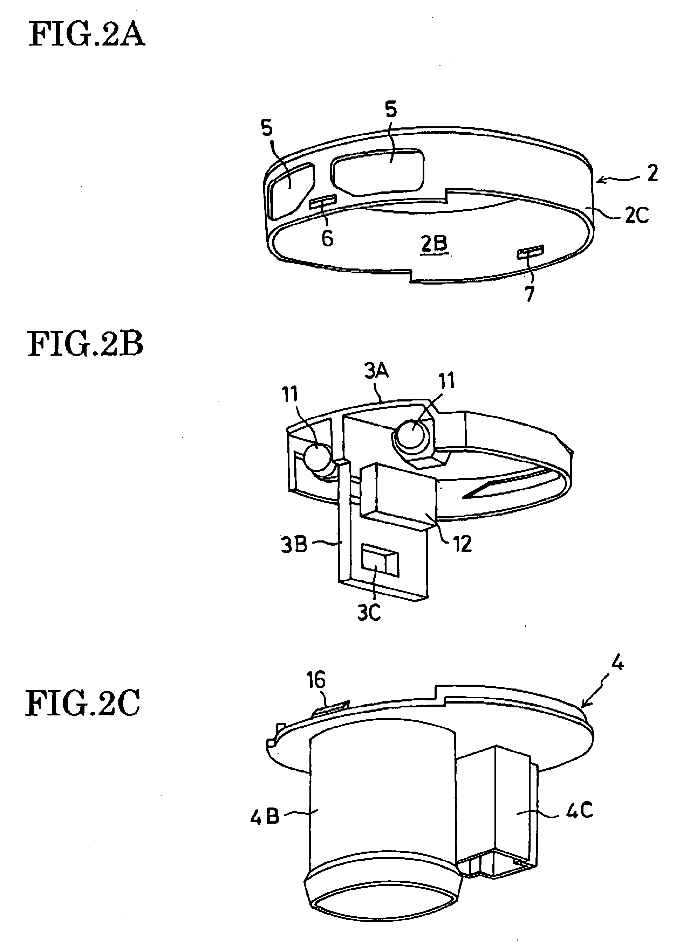

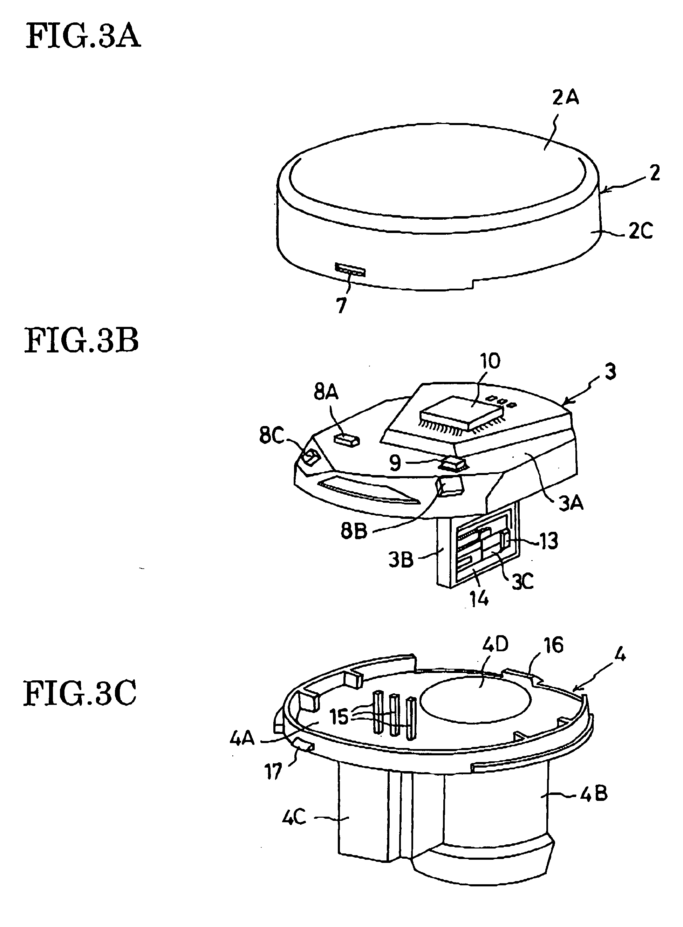

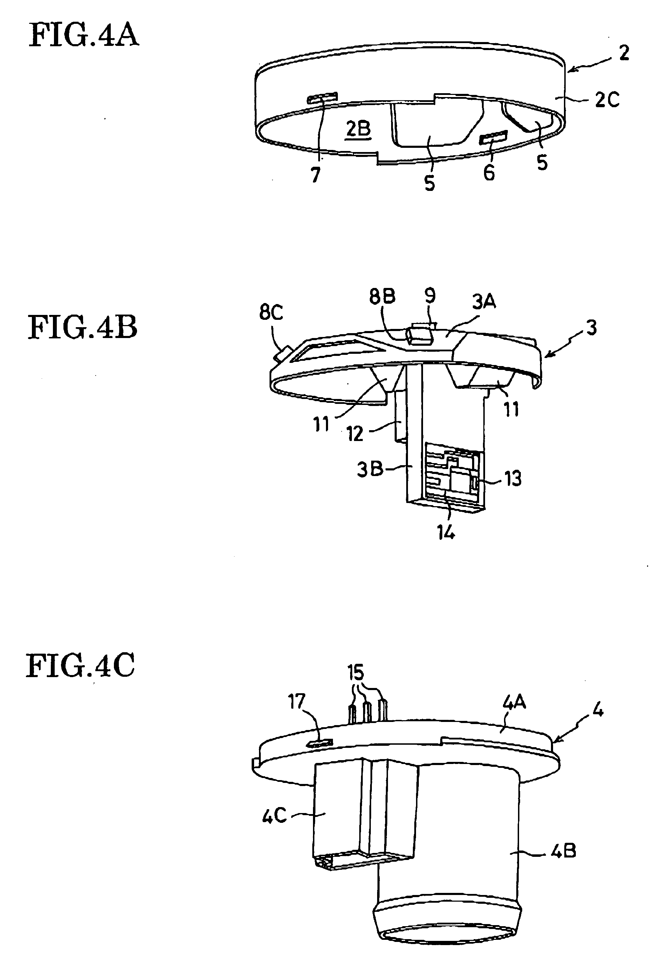

FIGs.1A-4C illustrate a state when the compound sensor according to the present invention is disassembled. FIGs. 1A-1C are perspective views as viewed from the rear and obliquely upward. FIGs. 2A-2C are perspective views as viewed from the rear and obliquely downward. FIGs. 3A-3C are perspective views as viewed from the front and obliquely upward. FIGs. 4A-4C are perspective views as viewed from the front and obliquely downward.

In FIGs. 1A-2C, the left obliquely downward view illustrates the rear side, and the right obliquely upward view illustrates the front side. In FIGs. 3A-4C, the left obliquely downward view illustrates the front side, and the right obliquely upward view illustrates the rear side. Moreover, when the above-described compound sensor is installed in the upper face of the instrument panel of a vehicle, the compound sensor is disposed such that the rear (front) side faces the back of the vehicle (i.e., vehicle interior side) and the front side faces the front of the vehicle.

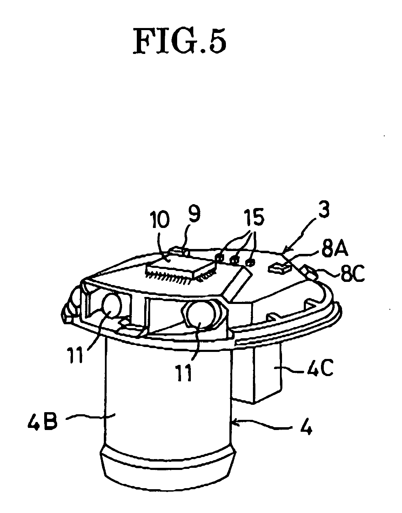

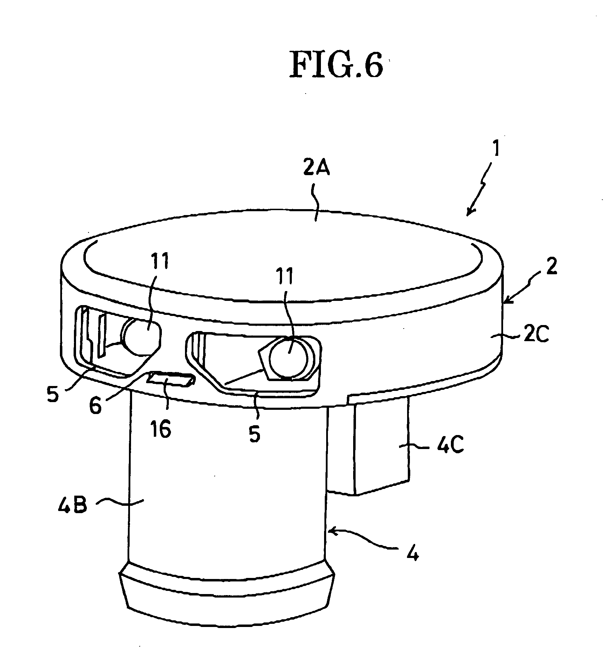

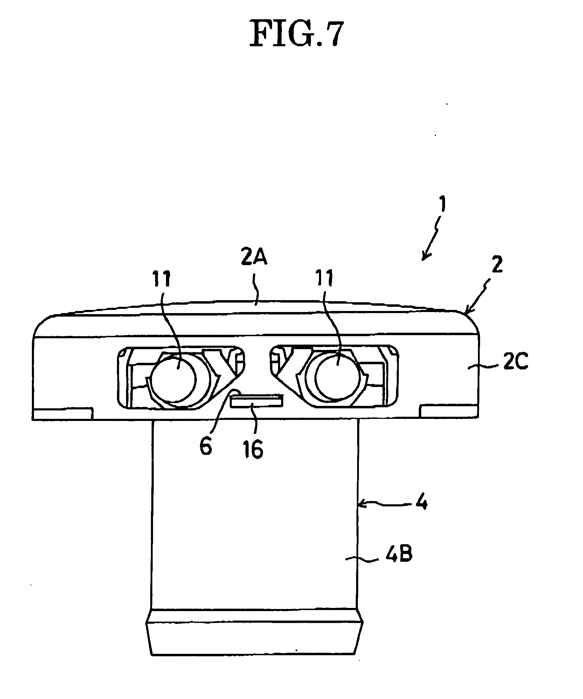

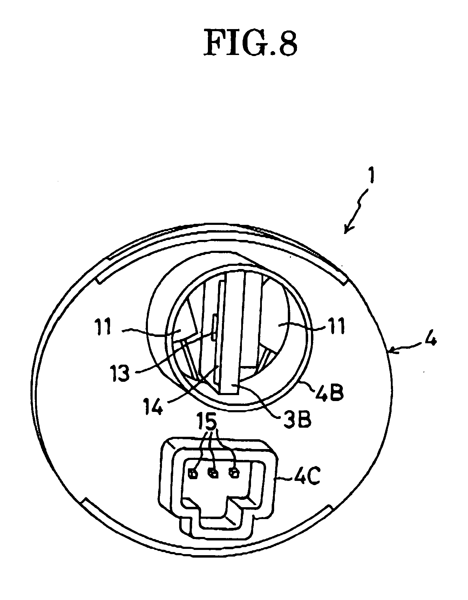

FIG. 5 is a perspective view illustrating the compound sensor with the cap removed. FIGs. 6-8 illustrate the external appearance of the compound sensor according to the present invention. FIG. 8 is a view illustrating the bottom face when slightly shifted from the central line.

A compound sensor 1 according to the present invention includes a cap 2, a sensor retainer 3, and a housing case 4, as illustrated in FIGs. 1A-4C.

The cap 2 includes a cylindrical shape having a bottom portion 2A, and is used such that the bottom portion 2A is located on the upper side and an opening end 2B is located on the lower side. The cap 2 is made of a translucent material through which sunlight passes. Two through-holes 5, 5, are formed in the back side of a side wall 2C of the cap 2. A locking hole 6 and a locking hole 7 arc formed on the back side and the front side, respectively, of the side wall 2C of the cap 2.

The sensor retainer 3 includes a light-shielding plate 3A having one face onto which sunlight is irradiated and the other face located on the side opposite the one face, which shields the passing-through of the sunlight from the one face to the other face. In the example illustrated in the figures, the light-shiclding plate 3A is disposed such that the one face faces upward in the up-and-down direction and follows the flat surface orthogonal to the up-and-down direction. More particularly, in this embodiment, the light-shielding plate 3A is disposed in the horizontal direction which follows the above-described flat surface.

The upper face which is the one face of the light-shielding plate 3A includes in the front portion thereof (in this embodiment, the right side of the front portion) a solar sensor 8A. The right and left portions of the front portion of the light-shielding plate 3A are obliquely cut, and the cut faces are provided with solar sensors 8B, 8C, respectively. The upper face of the light-shielding plate 3A includes in the front portion thereof an auto-light sensor 9. This auto-light sensor 9 automatically turns on a headlight or the like when a vehicle enters a tunnel or the like. The upper face of the light-shielding plate 3A includes in the central portion thereof a control IC 10. This control IC 10 controls the entire compound sensor 1.

The sensor retainer 3 includes an attachment plate 3B provided in the other face of the light-shielding plate 3A. This attachment plate 3B extends to the light-shielding area of the light-shielding plate along the up-and-down direction, namely, the vertical direction in the example illustrated in the figures. The light-shielding area is an area which becomes shadowed by the light-shielding plate 3A. The light-shielding plate 3A and the attachment plate 3B are made of a polyphthalamide (PPA). A thinner attachment plate is better, as long as the intensity of the attachment plate is ensured. This is because the heat conduction in the attachment plate 3B should be kept low. The light-shielding plate 3A and the attachment plate 3B are integrally formed. The other face of the light-shielding plate 3A includes in the right and left portions across the attachment plate 3B infrared sensors 11, 11, respectively. These infrared sensors 11, 11 detect the temperature of a person's face seated on a driver's seat or a passenger's seat.

As illustrated in FIGs. 1B, 2B, the attachment plate 3B includes in the upper portion thereof a sensor housing container 12, which contains a temperature sensor and a humidity sensor (temperature and humidity sensors are not shown in FIGs.). The attachment plate 3B includes in the lower portion thereof a through-hole 3C.

As illustrated in FIGs. 3B, 4B, the lower portion of the attachment plate 3B includes on the face opposite the face provided with the sensor container 12 an environment sensor 13 which is aligned with the through-hole 3C. Because the environment sensor 13 includes inside thereof a heater, it is preferable to keep the environment sensor away from the temperature sensor (i.e., the sensor housing container 12). The environment sensor 13 detects air components, air-polluting substances, and odors in the air.

The attachment plate 3 can be manufactured as a Molded Interconnect Device (MID), and a circuit pattern 14 around the environment sensor 13 illustrates that the attachment plate 3B is manufactured as a MID. In this embodiment, the communication between the various sensors and the control IC 10 uses a LIN (Local Interconnect Network).

As illustrated in FIGs. 1A-4C, the housing case 4 includes an upper case 4A onto which a part of the light-shielding plate 3A is placed, a cylindrical lower case 4B which extends downwardly from the bottom face of the upper case 4A, and a connector 4C which is disposed on the side of the lower case 4B and has inside thereof three signal takeout lines 15. A through-hole 4D is formed in the upper case 4A and the through-hole 4D communicates with the inside of the lower case 4B.

Locking claws 16, 17, each of which projects outwardly are formed in the outer circumference portions of the front and back portions of the upper case 4A, respectively. These locking claws 16, 17 can be engaged with the locking holes 6, 7 of the cap 2, respectively.

Next, an assembling procedure of the above-described compound sensor will be described.

At first, the solar sensors 8A-8C, the auto-light sensor 9, and the control IC 10 are installed on the upper face of the light-shielding plate 3A of the sensor retainer 3, the infrared light sensors 11, 11 are installed on the bottom face of the light-shielding plate 3A, and the sensor housing container 12 in which the temperature and the humidity sensors are housed is attached to the attachment plate 3B and the environment sensor 13 is attached near the through-hole 3C.

Next, the attachment plate 3B is housed in the lower case 4C via the through-hole 4D of the housing case 4 and the light-shielding plate 3A is placed on the upper case 4A of the housing case 4. In this case, the signal takeout lines 15 pass through the three through-holes 18 (refer to FIG. 1B) formed on the light-shielding plate 3A, respectively. FIG. 5 illustrates a state in which the sensor retainer 3 is assembled to the housing case 4.

The cap 2 is assembled to the sensor retainer 3 and the housing case 4 from the upward side. In this case, the two through-holes 5, 5 formed in the side wall 2C of the cap 2 are located to align with the infrared light sensors 11, 11 in the bottom face of the light-shielding plate 3A of the sensor retainer 3. Finally, the locking claws 16, 17 of the housing case 4 are engaged with the locking holes 6, 7, respectively, and the cap 2, the sensor retainer 3 and the housing case 4 are combined. FIGs. 6-8 illustrate the combined state.

Next, a function when the above-described compound sensor 1 is installed in the instrument panel will be described. In this case, the leading end of the lower case 4B of the housing case 4 is connected to the air-conditioning device, and the inside of the lower case 4B reaches negative pressure.

The solar sensors 8A-8C detect sunlight which has passed through the cap 2, and send the detected signal to the control IC 10. Thereby, the entering direction and the amount of solar radiation of the sunlight relative to a vehicle can be detected.

Since the inside of the lower case 4B of the housing case 4 is a negative pressure, the air in the vehicle enters the lower case 4B of the housing case 4 via the through-holes 5, 5 of the cap 2, and forms an air flow. The temperature and humidity in the vehicle can be detected by detecting the temperature and the humidity of the air flow by means of the temperature sensor and the humidity sensor in the sensor housing container 12. Since the air flow passes through the environment sensor 13, the air components, air-polluting substances and odors in the air in the vehicle can be detected by the environment sensor 13.

When a person is seated on a driver's seat or a passenger's seat, infrared light is emitted from the face of the person, so the temperature of the person seated on the driver's seat or the passenger's seat can be measured by measuring the infrared light by means of the infrared light sensor 11, 11 via the through-holes 5, 5.

According to the present invention, by organizing various kinds of sensors in such a way, a space for attaching the sensors can be improved, and a compound sensor capable of improving an operation for attaching the sensors can be realized.

According to the present embodiment, since the solar sensors 8A-8C are provided in the upper face of the light-shielding plate 3A, the entering direction and the amount of solar radiation of the sunlight can be effectively detected. In addition, since the sensor housing container 12 (i.e., a temperature sensor) is provided in the lower side of the light-shielding plate 3A, sunlight can be prevented from directly hitting the temperature sensor, and thus, the temperature of air around the temperature sensor can be effectively detected.

By organizing the solar sensors 8A-8C, the auto-light sensor 9, the infrared light sensors 11, 11, the environment sensor 13, and the temperature and humidity sensors in the sensor housing container 12 as the compound sensor 1, space for attaching the sensors can be improved, and also an operation for installing the sensors and an operation for wiring harnesses can be improved. Moreover, since a plurality of sensors can be collectively formed as one; the appearance can be improved, and an advantageous design can be obtained.

Furthermore, since the environment sensor 13 is disposed on the downstream side of the sensor housing container 12, the influence of the heat of the environment sensor 13 on the temperature sensor in the sensor housing container 12 can be controlled as much as possible, and the temperature in a vehicle interior can be effectively measured.

Although the present invention has been described in terms of exemplary embodiments, it is not limited thereto. It should be appreciated that variations may be made in the embodiments described by persons skilled in the art without departing from the scope of the present invention.

For example, the sensors to be mounted on the compound sensor 1 are not limited to the solar sensors 8A-8C, the auto-light sensor 9, the infrared light sensors 11, 11, the environment sensor 13, and the temperature and humidity sensors, and other sensors can be mounted on the compound sensor 1 of the present invention.

In this embodiment, the light-shielding plate 3A is disposed in the lateral direction such that its one face faces upward. However, the displacement position of the light-shielding plate 3A can be appropriately changed according to the irradiation direction of sunlight to the light-shielding plate 3A.

The present application is based on and claims priority from Japanese Patent Application No. 2007-066565, filed on, March 15, 2007, the disclosure of which is hereby incorporated by reference in its entirety.

## Claims

1. A compound sensor, comprising:
a light-shielding plate having one face onto which sunlight is irradiated and the other face located on a side opposite to the one face, which shields the sunlight from the one face side toward the other face side;
a solar sensor provided in the one face of the light-shielding plate; and
a temperature sensor provided in the other face side of the light-shielding plate.

2. The compound sensor according to Claim 1, wherein the solar sensor is disposed in right and left portions and a front portion of the light-shielding plate.

3. The compound sensor according to Claim 1 or Claim 2, wherein the other face of the light-shielding plate is provided with an attachment plate which extends in a light-shielding area of the light-shielding plate from the other face of the light-shielding plate, and the temperature sensor is disposed in the attachment plate.

4. The compound sensor according to Claim 3, wherein the attachment plate is provided with a humidity sensor and an environment sensor which detects an air components, an air-polluting substances, and odors in the air, in addition to the temperature sensor.

5. The compound sensor according to Claim 4, wherein an air flow is formed around the attachment plate, and the environment sensor is disposed in a downstream side of the temperature and humidity sensors along the air flow.

6. The compound sensor according to any one of Claims 2-5, wherein the one face of the light-shielding plate is provided with an auto-light sensor which detects visualized light having a predetermined intensity or more, in addition to the solar sensor.

7. The compound sensor according to any one of Claims 2-6, wherein the other face side of the light shielding plate is provided with an infrared sensor which measures a temperature of a person's face.

8. An instrument panel comprising the compound sensor according to any one of Claims 1-7.
